# EUROPÄISCHE PATENTSCHRIFT

(11) **EP 0 886 127 B1**
(45) Veröffentlichungstag und Bekanntmachung des Hinweises auf die Patenterteilung: **26.06.2002**
(21) Anmeldenummer: 98107235.8
(22) Anmeldetag: 21.04.1998
(51) Int. Cl.: G01F 11/02

(54) **Vorrichtung zum Dosieren von viskosen Massen**
Apparatus for metering a viscous product
Dispositif de dosage pour produits visqueux

(30) Priorität: 21.06.1997 DE 19726473
(43) Veröffentlichungstag der Anmeldung: 23.12.1998
(73) Patentinhaber: INT Gesellschaft mit beschränkter Haftung, Ingenieurbüro für neue Technologien, Anlagenbau, Verfahrenstechnik, ADFOSY, 33689 Bielefeld (DE)
(72) Erfinder: Oberschelp, Friedel, 32130 Enger (DE)
(74) Vertreter: TER MEER STEINMEISTER & PARTNER GbR

(56) Entgegenhaltungen:
- EP-A- 0 497 343
- DE-A- 4 107 479
- FR-A- 1 447 043
- US-A- 4 207 806
- US-A- 4 372 175
- US-A- 4 671 123

## Beschreibung

Die Erfindung betrifft eine Vorrichtung zum Dosieren von viskosen Massen gemäß dem Oberbegriff des Anspruchs 1.

Dosiervorrichtungen zum Dosieren von viskosen Massen gemäß dem Oberbegriff sind z.B. aus der FR 1 447 043 bekannt. Der Dosierkammer der Dosiervorrichtung wird über eine Zufuhrleitung die zu dosierende viskose Masse mit Hilfe einer der Dosierkammer vorgeschalteten Pumpe, die die Masse beispielsweise aus einem Behälter entnimmt, zugeführt. Beim Befüllen der Dosierkammer ist ein zwischen der Pumpe und der Dosierkammer angeordnetes Einlaßventil geöffnet, während ein der Dosierkammer nachgeschaltetes Auslaßventil geschlossen ist. Nach der Befüllung der Dosierkammer wird das Einlaßventil geschlossen, und das Auslaßventil wird geöffnet.

Ein in der Dosierkammer angeordneter Verdrängungskörper, der sich beim Füllen der Dosierkammer in eine Position bewegt, in der die Dosierkammer ihr größtes Volumen aufweist, wird mit Hilfe eines Antriebs, etwa eines Elektromotors, in die Dosierkammer hineinbewegt, so daß die in der Dosierkammer enthaltene viskose Masse verdrängt wird und durch das geöffnete Auslaßventil hindurch an einen Abgabepunkt abgegeben wird.

Wenn der Verdrängungskörper die Position erreicht hat, in der die Dosierkammer ihr kleinstes Volumen aufweist, ist eine dem Verdrängungsvolumen des Verdrängungskörpers entsprechende Menge der viskosen Masse an die Entnahmestelle abgegeben worden. Anschließend wird das Auslaßventil erneut geschlossen und das Einlaßventil geöffnet, und der Verdrängungskörper wird zurück in die Ausgangsposition bewegt. Durch die Förderwirkung der Pumpe wird die Dosierkammer wieder gefüllt.

Bei der Dosiervorrichtung der oben genannten Art stellen die Dosierkammer und der Antrieb für den in der Dosierkammer längsverschiebbaren Verdrängungskörper zwei voneinander getrennte Einheiten dar, die über ein Antriebselement, etwa einen Riementrieb, miteinander verbunden sind. Das führt zu einer verhältnismäßig sperrigen und aufwendigen Bauweise.

Aufgabe der Erfindung ist es daher, eine Vorrichtung gemäß dem Oberbegriff des Anspruchs 1 so zu gestalten, daß eine besonders kompakte und einfache Bauweise ermöglicht wird.

Diese Aufgabe wird erfindungsgemäß gelöst durch eine Vorrichtung zum Dosieren von viskosen Massen mit den in Anspruch 1 angegebenen Merkmalen.

In der Dosierkammer der Vorrichtung ist eine als Verdrängungskörper dienende Gewindestange längsverschiebbar angeordnet, die koaxial in einer Hohlwelle eines Elektromotors geführt ist, der als Antrieb dient. Die Hohlwelle ist mit einem Innengewindeabschnitt, etwa einer an wenigstens einem Ende der Hohlwelle befestigten Spindelmutter versehen, so daß die Gewindestange durch Drehung der Hohlwelle axial verschoben wird. Auf diese Weise erfolgt die Kopplung zwischen dem Antrieb und dem Verdrängungskörper auf sehr einfache und zudem kompakte Weise, da der Elektromotor und die Gewindestange in einer Wirkungslinie angeordnet sind. Bei der erfindungsgemäßen Dosiervorrichtung werden aufgrund dieser Anordnung die Drehbewegungen des Elektromotors direkt in eine Hubbewegung der in bezug auf den Elektromotor drehfest geführten Gewindestange umgesetzt. Beim Antrieb des Elektromotors in die eine Richtung wird die Gewindestange in die Dosierkammer hinein bewegt, so daß die in der Dosierkammer vorhandene viskose Masse aus dieser verdrängt wird. Beim Antrieb des Elektromotors in die andere Richtung wird die Gewindestange wieder in die Ausgangsposition zurückbewegt, in der die Dosierkammer ihr größtes Volumen aufweist.

Elektromotoren mit einer Hohlwelle sind an sich bekannt und auch als Normmotoren verfügbar, so daß die Schaffung der erfindungsgemäßen Dosiervorrichtung für viskose Massen kostengünstig möglich ist.

Vorzugsweise ist auch die Gewindestange hohl ausgebildet und Teil des Einlaßsystems zum Einleiten der Masse in die Dosierkammer. Dabei ist der Durchmesser des Einlaßkanals in der Gewindestange im Vergleich zum Gesamtdurchmesser der Gewindestange klein, so daß die Funktion als Verdrängungskörper gewährleistet ist. Das nicht in der Dosierkammer angeordnete freie Ende der Gewindestange ist mit einem flexiblen Schlauch oder dergleichen verbunden, der der Hubbewegung der Gewindestange beim Antrieb des Elektromotors folgt.

Die Gewindestange und die Spindelmutter sind vorzugsweise mit einem Trapezgewinde versehen, so daß die beim Drehen des Elektromotors auf die Gewindestange wirkenden Kräfte verschleißfrei aufgenommen werden können.

Im folgenden werden bevorzugte Ausführungsbeispiele der Erfindung anhand der Zeichnung näher erläutert.
- Fig. 1: ist ein Längschnitt durch eine erfindungsgemäße Dosiervorrichtung und zeigt eine in der Dosierkammer längsverschiebbare Gewindestange in einer ersten Endposition;
- Fig. 2: entspricht der Darstellung gemäß Fig. 1 und zeigt die Gewindestange in der zweiten Endposition.

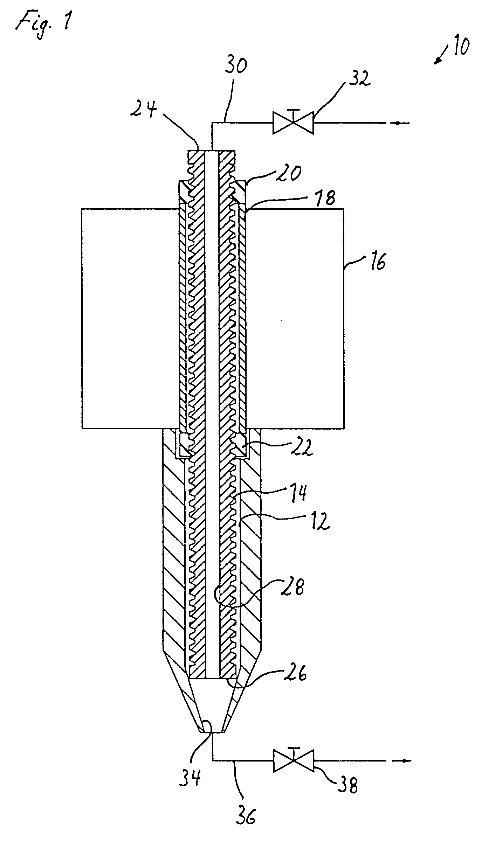

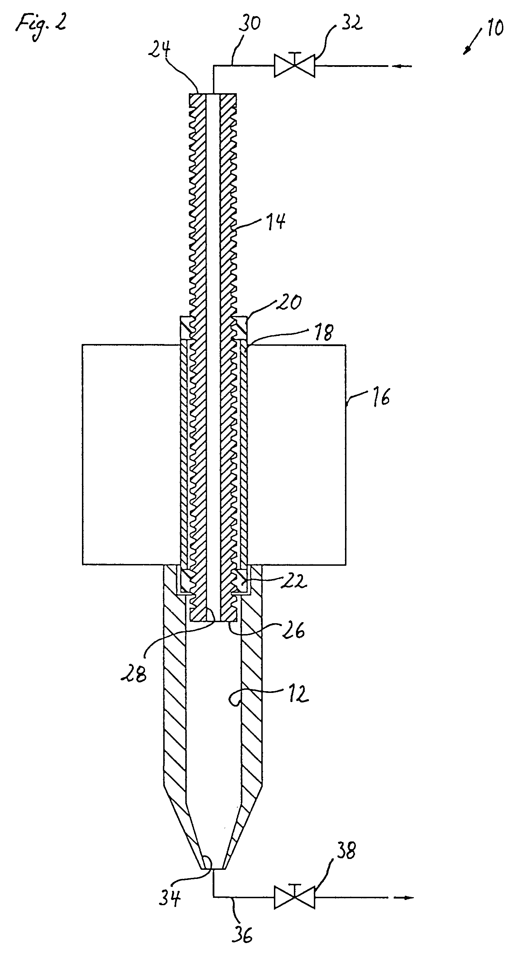

Die in der Beschreibung verwendeten Begriffe, wie "oben", "unten" etc. beziehen sich auf die Darstellung der Dosiervorrichtung gemäß Fig. 1 und 2.

Fig. 1 zeigt eine insgesamt mit 10 bezeichnete, als Durchflußdosierer arbeitende Dosiervorrichtung für viskose Massen, die gebildet wird aus einer zylindrischen Dosierkammer 12 mit im unteren Bereich kleiner werdendem Durchmesser, einer in der Dosierkammer 12 längsverschiebbaren, als Verdrängungskörper dienenden Gewindestange 14 und einem oberhalb der Dosierkammer 12 angeordneten Elektromotor 16. Der Elektromotor 16 ist mit einer Hohlwelle 18 versehen, durch die die Gewindestange 14 hindurchgeführt ist, und in der gezeigten Ausführungsform der Dosiervorrichtung sind die freien Enden der Hohlwelle 18 jeweils mit einer Spindelmutter 20,22 verbunden.

Die Gewindestange 14 steht mit den Spindelmuttern 20,22 der Hohlwelle 18 des Elektromotors 16 in Gewindeeingriff und wird durch eine nicht dargestellte Führung verdrehsicher gehalten, damit die Drehbewegung des Elektromotors 16 in eine Hubbewegung umgesetzt wird. Die Führung ist zweckmäßigerweise auf der der Dosierkammer gegenüberliegenden Seite des Elektromotors angeordnet.

Auf diese Weise wird die Gewindestange bei Drehung des Motors in die eine Richtung bis in eine in Fig. 1 gezeigte untere Endposition in die Dosierkammer 12 hinein bewegt, in der das Volumen der Dosierkammer am kleinsten ist, während die Gewindestange bei Drehung des Motors in die andere Richtung aus der Dosierkammer heraus in eine in Fig. 2 gezeigte obere Endposition bewegt wird, in der das Volumen der Dosierkammer 12 am größten ist.

Im gezeigten Ausführungsbeispiel ist die Länge der Gewindestange 14 so auf die Längsausdehnung der Dosierkammer 12 und des Elektromotors 16 bzw. der Hohlwelle 18 abgestimmt, daß in der unteren und oberen Endposition der Gewindestange ihr oberer bzw. unterer Endbereich 24, 26 nur noch geringfügig aus der Spindelmutter 20 bzw. 22 herausragt. Die Steuerung der Hubbewegung der Gewindestange 14 kann beispielsweise mit Hilfe von Endschaltern erfolgen, die an entsprechenden Positionen an der in der Zeichnung nicht gezeigten Führung, die die Gewindestange verdrehfest führt, vorgesehen sein können.

In diesem Zusammenhang ist zu erwähnen, daß im Gegensatz zu der in Fig. 1 und 2 gezeigten Ausführungsform die Gewindestange nur in einem Längenbereich, der dem Gesamthub der Gewindestange entspricht, mit einem Gewinde versehen sein muß. Ist nur eine Spindelmutter an der Hohlwelle 18 des Elektromotors 16 befestigt, ist auch nur ein Längenbereich mit einem Gewinde zu versehen, der dem Hub entspricht.

Im übrigen sind die Gewindestange 14 und die Spindelmuttern 20,22 mit einem Trapezgewinde versehen, das eine hohe Kraftübertragung bei geringem Verschleiß ermöglicht.

Wie in Fig. 1 zu sehen, ist die Gewindestange 14 hohl und bildet einen Einlaßkanal 28 für eine zu dosierende viskose Masse, beispielsweise einen Kleber. Das obere Ende der Gewindestange ist über eine flexible Leitung 30, die der Hubbewegung der Gewindestange folgen kann, mit einem Einlaßventil 32 verbunden, das in nicht gezeigter Weise mit Hilfe einer Steuerung ansteuerbar ist. Dem Einlaßventil 32 ist eine nicht gezeigte Pumpe vorgeschaltet, die die viskose Masse aus einem Vorratsbehälter, etwa einem Faß, entnimmt.

Eine Auslaßöffnung 34 der Dosierkammer 12 ist über eine Leitung 36 mit einem Auslaßventil 38 verbunden, das ebenfalls von der nicht gezeigten Steuerung ansteuerbar ist. Dem Auslaßventil 38 folgt eine nicht gezeigte Entnahmestelle für die viskose Masse.

Im folgenden soll anhand von Fig. 1 und 2 die Funktionsweise der erfindungsgemäßen Dosiervorrichtung 10 erläutert werden. Dabei soll zunächst von der in Fig. 1 gezeigten unteren Endposition der Gewindestange ausgegangen werden.

Die Gewindestange 14 befindet sich in der unteren Endposition, in der die in der Dosierkammer 12 enthaltene viskose Masse im wesentlichen vollständig aus dieser herausgepreßt wurde. Das Auslaßventil 38 ist dabei geöffnet, so daß die viskose Masse zu einer Entnahmestelle gelangt, während das Einlaßventil 32 geschlossen ist. Im folgenden wird der Elektromotor 16 von der nicht gezeigten Steuerung derart angesteuert, daß sich der Motor in die Richtung dreht, in der die Gewindestange 14 aus der unteren Endposition heraus in eine obere Position hinein bewegt wird, die in Fig. 2 gezeigt ist. Dabei ist das Auslaßventil 38 geschlossen und das Einlaßventil offen, so daß die Masse mit Unterstützung der Pumpe in die Dosierkammer gelangt. Das geschlossene Auslaßventil 38 verhindert dabei, daß die viskose Masse direkt zur Entnahmestelle gelangt.

Anschließend wird das Einlaßventil 32 erneut geschlossen und das Auslaßventil geöffnet, und der Elektromotor 16 wird so angesteuert, daß er sich in die entgegengesetzte Richtung dreht und die Gewindestange in die Dosierkammer 12 hinein bewegt wird. Dabei verdrängt die Gewindestange 14 die in der Dosierkammer 12 enthaltene Menge der viskosen Masse und drückt sie durch das Auslaßventil 38 hindurch bis zur Entnahmestelle. Wenn die Gewindestange 14 ihre untere Endposition erreicht hat, ist eine vom Verdrängungsvolumen der Gewindestange abhängige Menge der viskosen Masse abgegeben worden.

Um die Dosierkammer herum kann in einfacher Weise ein nicht gezeigter Heizmantel angeordnet werden, der die viskose Masse innerhalb der Dosierkammer auf eine vorgegebene Temperatur temperiert, bevor sie aus der Kammer herausgedrückt wird.

## Patentansprüche

1. Vorrichtung zum Dosieren von viskosen Massen, mit einer Dosierkammer (12) zum Dosieren der viskosen Masse, einem Antrieb (16), der einen in der Dosierkammer angeordneten Verdrängungskörper antreibt, einem der Dosierkammer (12) vorgeschalteten Einlaßventil (32) und einem der Dosierkammer (12) nachgeschalteten Auslaßventil (38), das nach dem Befüllen der Dosierkammer (12) zur Abgabe der dosierten viskosen Masse aus der Dosierkammer (12) geöffnet ist, **dadurch gekennzeichnet, daß** in der Dosierkammer (12) eine als Verdrängungskörper dienende Gewindestange (14) längsverschiebbar angeordnet ist, und daß die Gewindestange (14) koaxial in einer Hohlwelle (18) eines Elektromotors (16) angeordnet ist, in einer Führung verdrehtest geführt ist und mit der Hohlwelle (18) in Gewindeeingriff steht.

2. Vorrichtung gemäß Anspruch 1, **dadurch gekennzeichnet, daß** an wenigstens einem Ende der Hohlwelle (18) des Elektromotors (16) eine fest mit der Hohlwelle (18) verbundene, mit der Gewindestange (14) in Eingriff stehende Spindelmutter (20,22) befestigt ist.

3. Vorrichtung gemäß Anspruch 1 oder 2, **dadurch gekennzeichnet, daß** die Gewindestange (14) hohl ist und den Einlaßkanal (28) für die viskose Masse in die Dosierkammer (12) bildet.

4. Vorrichtung gemäß einem der Ansprüche 1 bis 3, **dadurch gekennzeichnet, daß** der Außendurchmesser der Gewindestange (14) geringfügig kleiner ist als der Innendurchmesser der Dosierkammer (12).

5. Vorrichtung gemäß einem der vorherigen Ansprüche, **dadurch gekennzeichnet, daß** die Gewindestange (14) und die Spindelmutter (20,22) ein Trapezgewinde aufweisen.

6. Vorrichtung gemäß einem der vorherigen Ansprüche, **dadurch gekennzeichnet, daß** um die Dosierkammer (12) herum eine Heizeinrichtung angeordnet ist.

## Claims

1. Apparatus for metering viscous substances, having a metering chamber (12) for metering the viscous substance, a drive (16) which drives a displacement body arranged in the metering chamber, an inlet valve (32) which is arranged upstream of the metering chamber (12), and an outlet valve (38) which is arranged downstream of the metering chamber (12) and which is opened to discharge the metered viscous substance out of the metering chamber (12) when the metering chamber (12) has been filled, **characterised in that** a threaded rod (14) acting as the displacement body is arranged in a longitudinally displaceable manner in the metering chamber (12) and **in that** the threaded rod (14) is arranged coaxially in a hollow shaft (18) of an electrical motor (16), is guided in a rotationally secure manner in a guide and is in threaded engagement with the hollow shaft (18).

2. Apparatus according to claim 1, **characterised in that** a spindle nut (20, 22) which is connected securely to the hollow shaft (18) and which is in engagement with the threaded rod (14) is secured to at least one end of the hollow shaft (18) of the electrical motor (16).

3. Apparatus according to claim 1 or 2, **characterised in that** the threaded rod (14) is hollow and forms the inlet duct (28) for the viscous substance into the metering chamber (12).

4. Apparatus according to any one of claims 1 to 3, **characterised in that** the outside diameter of the threaded rod (14) is slightly smaller than the inside diameter of the metering chamber (12).

5. Apparatus according to any one of the preceding claims, **characterised in that** the threaded rod (14) and the spindle nut (20, 22) have a trapezoidal thread.

6. Apparatus according to any one of the preceding claims, **characterised in that** a heating device is arranged around the metering chamber (12).

## Revendications

1. Dispositif de dosage de pâtes visqueuses, comportant une chambre de dosage (12) pour le dosage de la pâte visqueuse, un dispositif d'entraînement (16) qui entraîne un corps de refoulement disposé dans la chambre de dosage, une soupape d'admission (32) montée en amont de la chambre de dosage (12) et une soupape d'échappement (38) qui est montée en aval de la chambre de dosage (12) et qui, après remplissage de la chambre de dosage (12), est ouverte pour délivrer la pâte visqueuse dosée depuis la chambre de dosage (12), **caractérisé en ce que** dans la chambre de dosage (12) est disposée, de manière à pouvoir coulisser longitudinalement, une tige filetée (14) servant de corps de refoulement, et **en ce que** la tige filetée (14) est disposée coaxialement dans un arbre creux (18) d'un moteur électrique (16), est guidée solidairement en rotation dans un guide et est en prise par filetage avec l'arbre creux (18).

2. Dispositif selon la revendication 1, **caractérisé en ce qu'**à au moins une extrémité de l'arbre creux (18) du moteur électrique (16) est fixé un écrou de broche (20, 22) qui est solidaire de l'arbre creux (18) et qui est en prise avec la tige filetée (14).

3. Dispositif selon la revendication 1 ou 2, **caractérisé en ce que** la tige filetée (14) est creuse et forme le canal d'entrée (28) de la pâte visqueuse dans la chambre de dosage (12).

4. Dispositif selon l'une des revendications 1 à 3, **caractérisé en ce que** le diamètre extérieur de la tige filetée (14) est légèrement inférieur au diamètre intérieur de la chambre de dosage (12).

5. Dispositif selon l'une des revendications précédentes, **caractérisé en ce que** la tige filetée (14) et l'écrou de broche (20, 22) présentent un filetage trapézoïdal.

6. Dispositif selon l'une des revendications précédentes, **caractérisé en ce qu'**un dispositif de chauffage est disposé autour de la chambre de dosage (12).
